# EUROPÄISCHE PATENTSCHRIFT

(11) **EP 4 215 391 B1**
(45) Veröffentlichungstag und Bekanntmachung des Hinweises auf die Patenterteilung: **27.11.2024**
(21) Anmeldenummer: 22000265.3
(22) Anmeldetag: 22.12.2022
(51) Int. Cl.: B60K 6/46, B60K 6/44, B60K 6/32, B60W 20/16

(54) **VERFAHREN ZUM BETRIEB EINES HYBRID-ANTRIEBSSTRANGS**
METHOD FOR OPERATING A HYBRID DRIVE TRAIN
PROCÉDÉ DE FONCTIONNEMENT D'UNE CHAÎNE CINÉMATIQUE HYBRIDE

(30) Priorität: 22.01.2022 DE 102022000227
(43) Veröffentlichungstag der Anmeldung: 26.07.2023
(73) Patentinhaber: DEUTZ Aktiengesellschaft, 51149 Köln (DE)
(72) Erfinder: Akbarian, Taghi, Köln (DE); Hirmer, Manuel, Köln (DE)

(56) Entgegenhaltungen:
- DE-A1- 102006 036 443
- DE-A1- 102007 019 989
- DE-A1- 102019 220 196
- DE-A1- 102020 208 886

## Beschreibung

Die vorliegende Erfindung betrifft ein Verfahren zum Betrieb eines Hybrid-Antriebsstrangs. Die Erfindung betrifft insbesondere ein Verfahren zum Betrieb eines Hybrid-Antriebsstrangs mit einer wasserstoffbetriebenen Brennkraftmaschine. Die Erfindung betrifft im Speziellen ein Verfahren zum Betrieb eines seriellen Hybrid-Antriebsstrangs oder eines Hybrid-Antriebsstrangs, der zumindest zeitweise als serieller Hybrid-Antriebsstrang betrieben werden kann.

Hybrid-Antriebsstränge umfassen im Allgemeinen zwei verschiede Energieumwandler zum Antreiben einer mechanischen Last, beispielsweise Räder eines Fahrzeuges oder Hydraulikpumpen. Im Regelfall ist dabei der erste Energieumwandler als Brennkraftmaschine und der zweite Energieumwandler als elektrische Maschine ausgeführt. Alternativ kann anstatt der Brennkraftmaschine beispielweise auch eine Brennstoffzelle Verwendung finden.

Das Zusammenwirken der beiden Energieumwandler wird als Antriebsstrangtopologie bezeichnet. Bei seriellen Hybrid-Antriebssträngen treibt der erste Energieumwandler respektive die Brennkraftmaschine einen Generator an, der ein Energiebordnetz mit elektrischer Leistung versorgt. Der zweite Energieumwandler respektive die elektrische Maschine wandelt wiederum die elektrische Leistung des Energiebordnetzes in mechanische Energie, die zum Antreiben der mechanischen Last verwendet wird. Neben der seriellen Topologie von Hybrid-Antriebssträngen sind auch parallele und leistungsverzweigte Topologien für Hybrid-Antriebsstränge bekannt. Der erste Energieumwandler kann mit verschiedenen Kraftstoffen, beispielweise Benzin, Diesel und Wasserstoff betrieben werden. Je nach eingesetztem Kraftstoff weist der erste Energieumwandler je nach Betriebszustand unterschiedliche Emissionscharakteristiken auf. Insbesondere bei dynamischen Laständerungen können kurzzeitig hohe Emissionswerte auftreten.

Aus der US 2008/236916 A1 ist ein Verfahren zum Betreiben eines seriellen Hybrid-Antriebsstrangs für ein Kraftfahrzeug mit einer Brennkraftmaschine bekannt. Der Antriebsstrang umfasst eine Abtriebswelle, die drehfest mit einer ersten elektrischen Maschine verbunden ist, eine zweite elektrische Maschine, die mechanisch mit einem Antriebsrad des Fahrzeugs verbunden ist, einen elektrischen Energiespeicher, dem von der ersten und der zweiten elektrischen Maschine elektrische Energie zugeführt werden kann und der die erste und die zweite elektrische Maschine mit elektrischer Energie versorgen kann. Eine Steuereinheit verteilt elektrische Leistung zwischen dem elektrischen Energiespeicher und der zweiten elektrischen Maschine. Das Verfahren umfasst den Schritt des Steuerns einer Drehzahl der ersten elektrischen Maschine und der Leistungsabgabe der Brennkraftmaschine.

Aus der DE 10 2019 220 196 A1 ist ein Verfahren zum Betreiben eines Antriebsstrangs mit einem Energiespeichersystem eines Fahrzeugs bekannt. Der Antriebsstrang weist mehrere Antriebseinheiten auf, von denen wenigstens eine als elektrische Maschine ausgebildet ist. Mittels eines künstlichen neuronalen Netzes wird eine Betriebsstrategie für den Antriebsstrang ermittelt. Die Ermittlung der Betriebsstrategie erfolgt unter Optimierung bzw. mit dem Ziel der Optimierung einer Energieeffizienz von Antriebsstrang und Energiespeichersystem, was insbesondere auch eine möglichst geringe Emission von beispielsweise Kohlenstoffdioxid und/oder anderen Schadstoffen umfasst.

Aus der DE 10 2007 019 989 A1 ist ein Verfahren zum Betreiben eines Hybridantriebs mit mindestens einer elektrischen Maschine und mit mindestens einem Verbrennungsmotor als Antriebsmaschinen bekannt. Bei dem Verfahren erzeugt der Hybridantrieb ein angefordertes Soll-Antriebsmoment und gleichzeitig wird eine Soll-Leistung der elektrischen Maschine eingehalten. Die Regelung des Hybridantriebs erfolgt über Kennfelder, die unter der Randbedingung der Minimierung des Kraftstoffverbrauchs und/oder der Schadstoffemission "offline" erzeugt werden.

Der vorliegenden Erfindung liegt die Aufgabe zu Grunde ein Verfahren zum Betrieb eines Hybrid-Antriebsstrangs bereitzustellen, das eine dynamische Betriebsweise mit geringer Emission von Schadstoffen erlaubt.

Zur Lösung der zu Grunde liegenden Aufgabe wird ein Verfahren zum Betrieb eines Hybrid-Antriebsstrangs vorgeschlagen, umfassend die Schritte: Ermitteln eines Ist-Zustandsvektors einer Brennkraftmaschine des Hybrid-Antriebsstrangs, wobei der Ist-Zustandsvektor der Brennkraftmaschine (2) den Zustand der Brennkraftmaschine (2) zu einem Zeitpunkt (T) anhand von einer oder mehreren Vektorkoordinaten beschreibt; Ermitteln einer Ziel-Leistung der Brennkraftmaschine; Bestimmen eines Ziel-Kraftstoffmassenflusses für die Brennkraftmaschine in Abhängigkeit der Ziel-Leistung der Brennkraftmaschine; Bestimmen eines Grenz-Kraftstoffmassenflusses der Brennkraftmaschine in Abhängigkeit eines Emissionsgrenzwertes, des Ziel-Kraftstoffmassenflusses und des Ist-Zustandsvektors der Brennkraftmaschine; Bestimmen eines Soll-Kraftstoffmassenflusses durch Minimalwertbildung in Abhängigkeit von Ziel-Kraftstoffmassenfluss und Grenz-Kraftstoffmassenfluss; und Einstellen des Soll-Kraftstoffmassenflusses an der Brennkraftmaschine.

Das erfindungsgemäße Verfahren weist den Vorteil auf, dass das Bestimmen und das Einstellen des Soll-Kraftmassenflusses sehr schnell erfolgen kann, sodass ein hochdynamischer Betrieb bei dauerhafter Einhaltung von Emissionsgrenzwerten gewährleistet werden kann. Somit kann beispielsweise auf eine Abgasnachbehandlung mit einem SCR-System verzichtet werden. Auch auf die üblicherweise eingesetzten Stickoxidsensoren könnte verzichtet werden, wenn die gesetzlichen Vorschriften dies zulassen.

Als optionale Verfahrensschritte kann das Bestimmen einer Soll-Entladung des elektrischen Energiespeichers in Abhängigkeit der Differenz von Ziel-Kraftstoffmassenfluss und Soll-Kraftstoffmassenfluss und das Einstellen der Soll-Entladung des elektrischen Energiespeichers zum Antreiben einer Abtriebsanordnung des Hybrid-Antriebsstrangs vorgesehen sein. Für das Bestimmen einer Soll-Entladung des elektrischen Energiespeichers kann zunächst aus der Differenz von Ziel-Kraftstoffmassenfluss und Grenz-Kraftstoffmassenfluss eine Differenz-Leistung bestimmt werden, die durch den elektrischen Energiespeicher bereitgestellt werden soll. Von der Differenz-Leistung kann eine gewünschte Ladeleistung des elektrischen Energiespeichers des Hybrid-Antriebsstrangs, die zuvor für die Ermittlung der Ziel-Leistung des Verbrennungsmotors ermittelt wurde, für die Bestimmung der Soll-entladung subtrahiert werden.

Als Hybrid-Antriebsstrang sollen unter anderem Antriebstränge mit zwei unterschiedlichen Energiewandlern, nämlich einer Brennkraftmaschine und einer elektrischen Maschine, sowie insbesondere zumindest einem Energiespeicher, nämlich einem Kraftstofftank für die Brennkraftmaschine, verstanden werden. Im Speziellen kann der Hybrid-Antriebsstrang zumindest zwei Energiespeicher aufweisen, nämlich den Kraftstofftank für die Brennkraftmaschine und eine Batterie.

Die Brennkraftmaschine kann als Wasserstoffverbrennungsmotor ausgeführt sein. Die Brennkraftmaschine wird sodann mit einem Luft-Wasserstoff-Gemisch betrieben. Die Brennkraftmaschine kann als Ammoniakverbrennungsmotor ausgeführt sein. Die Brennkraftmaschine wird sodann mit einem Luft-Ammoniak-Gemisch betrieben.

Die Abtriebsanordnung des Hybrid-Antriebsstrangs kann ein oder mehrere Abtriebseinheiten, insbesondere in Form von Elektromotoren, umfassen.

Der Hybrid-Antriebsstrang kann einen Generator aufweisen, der mechanisch mit der Brennkraftmaschine gekoppelt ist und über einen elektrischen Zwischenkreis eines Energiebordnetzes mit einer Abtriebsanordnung des Hybrid-Antriebsstrangs sowie dem elektrischen Energiespeicher elektrisch verbunden ist. Zwischen dem Generator und dem elektrischen Zwischenkreis des Energiebordnetzes kann ein Stromwandler vorgesehen sein, der den abgegebenen Wechselstrom des Generators in Gleichstrom wandeln kann und insbesondere als bi-direktionaler Stromwandler ausgeführt ist. Der elektrische Energiespeicher kann einen DC/DC- Wandler umfassen, der die Batteriegleichspannung auf das angestrebte Gleichspannungsniveau des elektrischen Zwischenkreises wandeln kann. Zwischen dem elektrischen Zwischenkreis des Energiebordnetzes und der Abtriebsanordnung kann eine Stromwandleranordnung vorgesehen sein, die den Gleichstrom des elektrischen Zwischenkreises in einen Wechselstrom wandeln kann, durch den die Abtriebsanordnung angetrieben werden kann. Weist die Abtriebsanordnung des Hybrid-Antriebsstrangs mehrere Abtriebseinheiten auf, kann jeder Abtriebseinheit ein separater Stromwandler zugeordnet sein, der mit dem elektrischen Zwischenkreis verbunden ist und den Gleichstrom des elektrischen Zwischenkreises in einen Wechselstrom wandeln kann. Auch die Stromwandleranordnung respektive die separaten Stromwandler können insbesondere als bi-direktionale Stromwandler ausgeführt sein.

Der Ist-Zustandsvektor der Brennkraftmaschine beschreibt den Zustand der Brennkraftmaschine zum Zeitpunkt T anhand von einer oder mehreren Vektorkoordinaten. Der Ist-Zustandsvektor kann als Koordinaten zumindest einen Ist-Wert von Drehzahl der Brennkraftmaschine, Druck im Verteilerrohr des Einspritzsystems, Kraftstoffmassenfluss, Zeitpunkt der Kraftstoff-Injektion im Arbeitsspiel, Anteil des zurückgeführten Abgases zur Frischluftmasse und Luftmassenstrom umfassen.

Die Ziel-Leistung der Brennkraftmaschine ist die Leistung, die im Idealfall von der Brennkraftmaschine zu einem dem Zeitpunkt T nachgelagerten Zeitpunkt T+1 aufgebracht werden soll. Das Ermitteln der Ziel-Leistung der Brennkraftmaschine kann in Abhängigkeit von einer Leistungsanforderung der Abtriebsanordnung des Hybrid-Antriebsstrangs und einer gewünschten Ladeleistung des elektrischen Energiespeichers des Hybrid-Antriebsstrangs erfolgen. Dabei kann die Leistungsanforderung der Abtriebsanordnung in Abhängigkeit des Leistungsbedarfs mehrerer Abtriebseinheiten der Abtriebsanordnung ermittelt werden. Die gewünschte Ladeleistung des Energiespeichers kann in Abhängigkeit des Ladezustandes des Energiespeichers und/oder der Leistungsanforderung der Abtriebsanordnung ermittelt werden.

Der Ziel-Kraftstoffmassenfluss ist der Kraftstoffmassenfluss, der in der Brennkraftmaschine zu einem dem Zeitpunkt T nachgelagerten Zeitpunkt T +1 in mechanische Energie umgewandelt werden soll, sodass die Brennkraftmaschine die Ziel-Leistung zum Zeitpunkt T+1 aufbringen kann. Das Bestimmen des Ziel-Kraftstoffmassenflusses kann zusätzlich in Abhängigkeit des Ist-Zustandsvektors der Brennkraftmaschine erfolgen. Insbesondere kann das Bestimmen des Ziel-Kraftstoffmassenflusses zusätzlich in Abhängigkeit zumindest einer Teilzahl der Koordinaten des Ist-Zustandsvektors der Brennkraftmaschine erfolgen.

Der Emissionsgrenzwert kann ein Grenz-Emissionsvektor für die Grenzwerte mehrerer Emissionsarten sein. Der Grenz-Emissionsvektor kann dabei ein oder mehrere Koordinaten umfassen, die jeweils den Grenzwert einer Emissionsart definieren. Als Emissionsarten kommen beispielsweise Stickoxide NOx, Kohlendioxid CO2 oder Feinstaub in Betracht. Der Emissionsgrenzwert respektive die Koordinaten des Grenz-Emissionsvektors können abhängig von zumindest einem von dem Ist-Zustandsvektor einer Brennkraftmaschine, der Ziel-Leistung der Brennkraftmaschine und des Ziel-Kraftstoffmassenflusses für die Brennkraftmaschine sein. Hierzu können beispielweise Kennlinien und/oder Kennfelder ausgelesen werden.

Der Grenz-Kraftstoffmassenfluss ist der Kraftstoffmassenfluss, der maximal in der Brennkraftmaschine zu einem dem Zeitpunkt T nachgelagerten Zeitpunkt T +1 in mechanische Energie umgewandelt werden kann, sodass definierte Randbedingungen, beispielsweise der Emissionsgrenzwerte respektive zumindest eine Teilzahl der Emissionsgrenzwerte des Grenz-Emissionsvektors, beim Betrieb der Brennkraftmaschine eingehalten werden. Das Bestimmen des Grenz-Kraftstoffmassenflusses der Brennkraftmaschine kann zusätzlich in Abhängigkeit eines Vorhersage-Emissionswertes erfolgen, der insbesondere durch ein Datenmodell modellierten wird. Der Vorhersage-Emissionswert wird dabei für den Zeitpunkt T+1 modelliert.

Das Bestimmen des Grenz-Kraftstoffmassenflusses der Brennkraftmaschine kann mittels eines Datenmodells erfolgen, wobei ein Eingabe-Kraftstoffmassenfluss des Datenmodells solange iterativ herabgesetzt wird, bis ein durch das Datenmodell für den Zeitpunkt T +1 modellierter Vorhersage-Emissionswert kleiner oder gleich zu dem Emissionsgrenzwert ist. Das Datenmodell kann auf als Emissionsprädiktion bezeichnet werden.

Ist der Emissionsgrenzwert als Grenz-Emissionsvektor ausgeführt, kann das Bestimmen des Grenz-Kraftstoffmassenflusses der Brennkraftmaschine mittels des Datenmodells erfolgen, wobei der Eingabe-Kraftstoffmassenfluss des Datenmodells solange iterativ herabgesetzt wird, bis die Koordinaten eines von dem Datenmodell modellierten Vorhersage-Emissionsvektors des Datenmodells kleiner oder gleich zu den zugehörigen Emissionsgrenzwerten des Grenz-Emissionsvektors sind. Der Vorhersage-Emissionsvektor umfasst dabei die von dem Datenmodell modellierten Emissionswerte zum Zeitpunkt T +1 als Koordinaten.

Der Eingabe-Kraftstoffmassenfluss des Datenmodells kann dabei sowohl im Falle eines einzelnen Emissionsgrenzwertes als auch bei einem Grenz-Emissionsvektors initial mit dem zuvor bestimmten Ziel-Kraftstoffmassenfluss gleichgesetzt werden.

Durch das Datenmodell kann zudem ein Ist-Emissionsvektor modelliert werden, der die von dem Datenmodell modellierten Emissionswerte zum Zeitpunkt T als Koordinaten umfasst.

Das Bestimmen des Grenz-Kraftstoffmassenflusses der Brennkraftmaschine kann alternativ oder in Kombination mittels eines Datenmodells erfolgen, das ein künstliches neuronales Netz umfasst. Das künstliche neuronale Netz kann als Neuronen einer Eingabeschicht zumindest den Ist-Zustandsvektors der Brennkraftmaschine oder eine Teilzahl der Koordinaten des Ist-Zustandsvektors, den Ziel-Kraftstoffmassenfluss und/oder den Emissionsgrenzwert respektive den Grenz-Emissionsvektor aufweisen. Das künstliche neuronale Netz kann als Neuronen einer Ausgangsschicht den Grenz-Kraftstoffmassenfluss und/oder den Ist-Emissionsvektor und/oder den Vorhersage-Emissionsvektor aufweisen.

Das künstliche neuronale Netz kann zu einem Zeitpunkt T0, der zeitlich vor dem Zeitpunkt T liegt, auf Basis von aus einer Simulation gewonnenen Daten der Brennkraftmaschine oder auf Basis von Messdaten aus Prüfläufen der Brennkraftmaschine eingelernt werden. Darüber hinaus kann das neuronale Netz auf Basis einer Kombination von aus einer Simulation gewonnenen Daten der Brennkraftmaschine und Messdaten aus Prüfläufen der Brennkraftmaschine eingelernt werden Dieser Verfahrensschritt kann auch als Basis-Kalibration des künstlichen neuronalen Netzes bezeichnet werden.

Der Soll-Kraftstoffmassenfluss ist der Kraftstoffmassenfluss, der tatsächlich in der Brennkraftmaschine zu einem dem Zeitpunkt T nachgelagerten Zeitpunkt T +1 in mechanische Energie umgewandelt wird. Das Einstellen des Soll-Kraftstoffmassenfluss an der Brennkraftmaschine erfolgt somit zu dem dem Zeitpunkt T nachgelagerten Zeitpunkt T+1.

Das Bestimmen eines Soll-Kraftstoffmassenflusses erfolgt durch Minimalwertbildung in Abhängigkeit von Ziel-Kraftstoffmassenfluss und Grenz-Kraftstoffmassenfluss. Mit anderen Worten erfolgt das Bestimmen eines Soll-Kraftstoffmassenflusses durch Minimalwertbildung, wobei die Minimalwertbildung eine Funktion von Ziel-Kraftstoffmassenfluss und Grenz-Kraftstoffmassenfluss ist.

Für das Bestimmen des Soll-Kraftstoffmassenflusses durch Minimalwertbildung in Abhängigkeit von Ziel-Kraftstoffmassenfluss und Grenz-Kraftstoffmassenfluss kann der Minimalwert von Ziel-Kraftstoffmassenfluss und Grenz-Kraftstoffmassenfluss als Soll-Kraftstoffmassenfluss gesetzt werden. Für das Bestimmen des Soll-Kraftstoffmassenflusses durch Minimalwertbildung in Abhängigkeit von Ziel-Kraftstoffmassenfluss und Grenz-Kraftstoffmassenfluss kann alternativ der Ziel-Kraftstoffmassenfluss zunächst in ein Ziel-Drehmoment und der Grenz-Kraftstoffmassenfluss in ein Grenz-Drehmoment umgerechnet werden. Nachfolgend kann der Minimalwert aus Ziel-Drehmoment und Grenz-Drehmoment gebildet werden, wobei der resultierende Minimalwert wiederum in einen Kraftstoffmassenfluss umgerechnet werden kann, der als Soll-Kraftstoffmassenfluss festgesetzt wird.

Grundsätzlich erkennt der Fachmann, dass der Kraftstoffmassenfluss näherungsweise proportional zum Drehmoment der Brennkraftmaschine ist. Somit können in dem Verfahren weitere Verfahrensschritte vorgesehen sein, in denen einer von dem Ziel-Kraftstoffmassenfluss, Grenz-Kraftstoffmassenfluss oder Soll-Kraftstoffmassenfluss in ein korrespondierendes Drehmoment umgerechnet wird und umgekehrt.

Alternativ oder in Kombination kann das Bestimmen des Soll-Kraftstoffmassenflusses in Abhängigkeit einer zur Verfügung stehenden Entladeleistung des elektrischen Energiespeichers erfolgen. Hierfür kann die zur Verfügung stehende Entladeleistung des elektrischen Energiespeichers bestimmt werden, insbesondere in Abhängigkeit des Ladezustandes des elektrischen Energiespeichers.

Nachfolgend wird anhand der Figuren ein Ausführungsbeispiel des Verfahrens erläutert. Dabei zeigt
- Figur 1: eine schematische Ansicht eines Hybrid-Antriebsstrangs mit serieller Topologie; und
- Figur 2: das erfindungsgemäße Verfahren in einem Flussdiagramm.

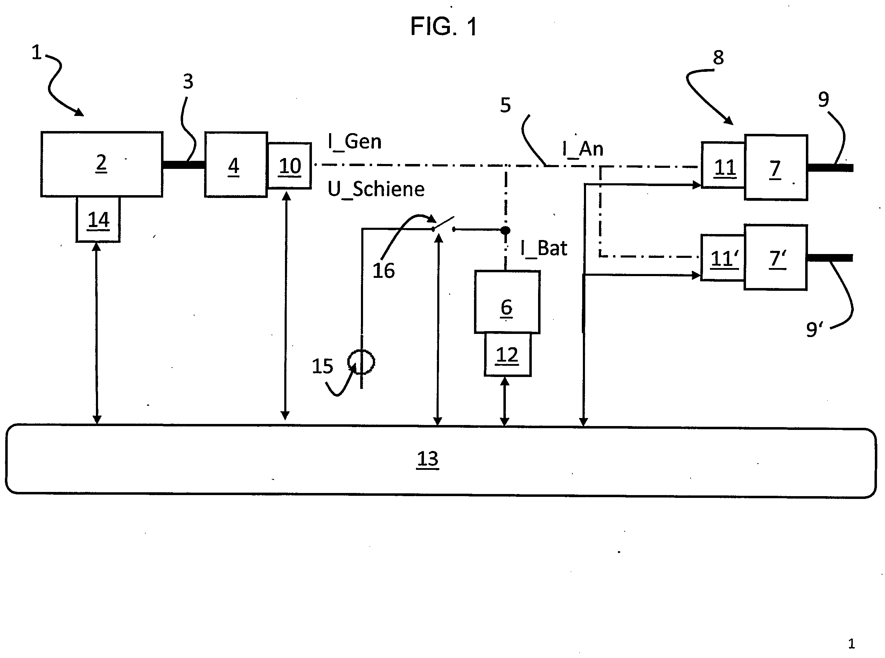

In Figur 1 wird ein Hybrid-Antriebsstrang 1 mit serieller Topologie gezeigt, der mit dem erfindungsgemäßen Verfahren betrieben werden kann. Der Hybrid-Antriebsstrang 1 umfasst eine Brennkraftmaschine 2, die über eine Motorwelle 3 fest mit einem Generator 4 verbunden ist und diesen drehend antreiben kann. Die Brennkraftmaschine 2 wird vorliegend als WasserstoffVerbrennungsmotor betrieben. Der Generator 4 ist über einen elektrischen Zwischenkreis eines Energiebordnetzes mit einem elektrischen Energiespeicher 6 und einer Abtriebsanordnung 8 elektrisch verbunden. Der elektrische Zwischenkreis 5 kann beispielsweise als Kabelbaum oder Stromschiene ausgeführt sein. Der elektrische Zwischenkreis 5 ist über einen Schalter 16 schaltbar mit einer äußeren Spannungsquelle 15 verbunden, beispielsweise mit dem allgemeinen Niederspannungsstromnetz. Der Generator 4 und die Spannungsquelle 15 können somit wahlweise oder in Kombination eine Spannung an den elektrischen Zwischenkreis 5 anlegen, sodass die Abtriebsanordnung 8 betrieben und/oder der.Energiespeicher 6 geladen werden kann.

Der elektrische Energiespeicher 6 ist vorliegend als Batterie in Form eines Li-lonen-Akkumulators ausgestalteten. Alternativ können auch andere Ackumulatoren oder auch Kondensatoren Verwendung finden. Die Abtriebsanordnung 8 umfasst eine erste Abtriebseinheit 7 und eine zweite Abtriebseinheit 7', die jeweils als Elektromotor ausgestaltet sind. Die erste Abtriebseinheit 7 und die zweite Abtriebseinheit 7' weisen jeweils eine Abtriebswelle 9, 9' auf, die mit einer nicht dargestellten mechanischen Last verbunden ist. Die mechanischen Lasten sind vorliegend Hydraulikpumpen, ohne darauf beschränkt zu sein. Es versteht sich, dass die Abtriebsanordnung 8 beliebig viele Abtriebseinheiten umfassen kann, die jeweils gleich oder unterschiedlich ausgeführt sein können.

Der Generator 4 umfasst eine Generatorsteuereinheit 10, die eine Zustandsüberwachung umfasst, mittels derer beispielweise die Generatordrehzahl und/oder der von dem Generator 4 in den elektrischen Zwischenkreis 5 eingeleiteten Strom I_Gen und/oder die an dem elektrischen Zwischenkreis 5 anliegende Spannung U_Schiene überwacht werden kann. Die Generatorsteuereinheit 10 umfasst zudem eine Leistungselektronik in Form eines bi-direktionalen AC/DC-Stromwandlers. Der AC/DC-Stromwandlers kann eine von dem Generator 4 bereitgestellte Wechselspannung in eine Gleichspannung wandeln, die an dem elektrischen Zwischenkreis 5 angelegt wird. Die Leistungselektronik der Generatorsteuereinheit 10 kann zudem die durch den Generator 4 in den elektrischen Zwischenkreis 5 eingespeiste Leistung regeln.

Die erste und die zweite Abtriebseinheit 7, 7' umfassen jeweils eine Abtriebssteuereinheit 11, 11', die eine Zustandsüberwachung aufweist, mittels derer beispielweise die Drehzahl, das Abtriebsmoment und/oder die Abtriebsleistung der Abtriebswellen 9, 9' und/oder die an dem elektrischen Zwischenkreis 5 anliegende Spannung U_Schiene überwacht werden kann. Die Abtriebssteuereinheiten 11, 11' umfassen jeweils eine Leistungselektronik in Form eines bi-direktionalen AC/DC-Stromwandlers zum Regeln des an den Abtriebswellen 9, 9' anliegende Abtriebsmoments. Der AC/DC-Stromwandler kann dabei eine von dem elektrischen Zwischenkreis 5 bereitgestellte Gleichspannung in eine Wechselspannung wandeln, die an die Abtriebseinheiten 7, 7' angelegt wird. Über den AC/DC-Stromwandler kann zudem die Frequenz des Wechselstromes geregelt werden.

Der elektrische Energiespeicher 6 umfasst eine Energiespeichersteuereinheit 12, die eine Zustandsüberwachung umfasst, mittels derer beispielweise der Ladezustand des Energiespeichers 6 sowie der Lade- bzw. Entladungsstrom I_Bat überwacht werden können. Wird der Energiespeicher 6 geladen, weist I_Bat ein negatives Vorzeichen auf. Wird der Energiespeicher 6 entladen, weist I_Bat ein positives Vorzeichen auf.

Der in die Abtriebsanordnung 8 fließende Strom I_An ergibt sich aus der Summe des von dem Generator 4 in den elektrischen Zwischenkreis 5 eingeleiteten Strom I_Gen und dem Lade- bzw. Entladungsstrom I_Bat.

Die Brennkraftmaschine 2 umfasst eine Motorsteuereinheit 14, die eine Zustandsüberwachung aufweist, mittels derer ein Ist-Zustandsvektor der Brennkraftmaschine 2 ermittelt werden kann. Der Ist-Zustandsvektor der Brennkraftmaschine 2 beschreibt den Zustand der Brennkraftmaschine 2 zu einem definierten Zeitpunkt T anhand von Vektorkoordinaten. Der Ist-Zustandsvektor umfasst vorliegend die Ist-Werte von Drehzahl der Brennkraftmaschine, Druck im Verteilerrohr des Einspritzsystems, Kraftstoffmassenfluss, Zeitpunkt der Kraftstoff-Injektion im Arbeitsspiel, Anteil des zurückgeführten Abgases zur Frischluftmasse und Luftmassenstrom, ohne darauf beschränkt zu sein. Die Motorsteuereinheit 14 kann zudem die für den Betrieb der Brennkraftmaschine 2 nötigen Parameter regeln.

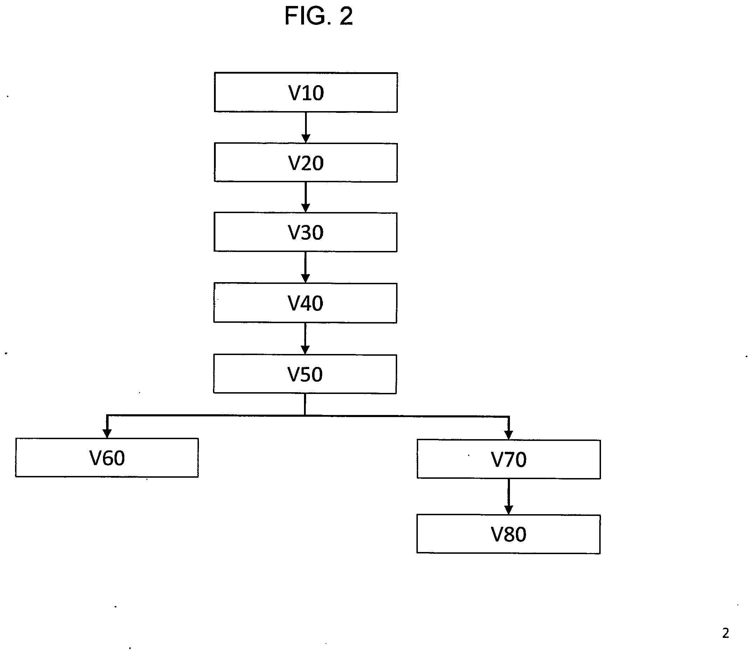

Eine übergeordnete Steuereinheit 13 ist ausgestaltet, mit der Generatorsteuereinheit 10, den Abtriebssteuereinheiten 11, 11', der Energiespeichersteuereinheit 12 und der Motorsteuereinheit 14 zu kommunizieren und den Schalter 16 zu steuern. Die Steuereinheit 13 ist ausgestaltet, den Hybrid-Antriebsstrang 1 entsprechend dem in Figur 2 gezeigten Verfahren zu betreiben.

Die Steuereinheit 13 ermittelt in einem Verfahrensschritt V10 den Ist-Zustandsvektor der Brennkraftmaschine 2 des Hybrid-Antriebsstrangs 1 zum Zeitpunkt T. Hierzu wird der Ist-Zustandsvektor von der Motorsteuereinheit 14 an die Steuereinheit 13 übertragen.

In einem nachfolgenden Verfahrensschritt V20 ermittelt die Steuereinheit 13 eine Ziel-Leistung der Brennkraftmaschine 2. Die Ermittlung der Ziel-Leistung der Brennkraftmaschine 2 erfolgt in Abhängigkeit von einer Leistungsanforderung der Abtriebsanordnung 8 und einer gewünschten Ladeleistung des elektrischen Energiespeichers 6. Hierzu wird von den Abtriebssteuereinheiten 11, 11' jeweils die Drehzahl und das Abtriebsmoment der Abtriebswellen 9, 9'der Antriebseinheiten 7, 7' an die Steuereinheit 13 übertragen. Die Steuereinheit 13 errechnet für jede Antriebseinheit 7, 7' eine Abtriebsleistung aus der jeweiligen Drehzahl und dem jeweiligen Abtriebsmoment. Alternativ kann die Abtriebsleistung in den Abtriebssteuereinheiten 11, 11' ermittelt werden und direkt an die Steuereinheit 13 kommuniziert werden. Die Leistungsanforderung der Abtriebsanordnung 8 ergibt sich aus der Summe der Abtriebsleistungen der Antriebseinheiten 7, 7'.

Die gewünschte Ladeleistung des elektrischen Energiespeichers 6 kann von der Energiespeichersteuereinheit 12 oder der Steuereinheit 13 in Abhängigkeit des Ladezustandes des Energiespeichers 6 und/oder in Abhängigkeit der Leistungsanforderungen der Abtriebsanordnung 8 bestimmt werden.

In einem weiteren Verfahrensschritt V30 wird durch die Steuereinheit 13 der Ziel-Kraftstoffmassenfluss für die Brennkraftmaschine 2 in Abhängigkeit der Ziel-Leistung der Brennkraftmaschine 2 und in Abhängigkeit des Ist-Zustandsvektors der Brennkraftmaschine 2 bestimmt. Die Bestimmung des Ziel-Kraftstoffmassenflusses für die Brennkraftmaschine 2 kann dabei über Datenmodelle oder Kennfelder erfolgen.

In einem weiteren Verfahrensschritt V40 wird durch die Steuereinheit 13 der Grenz-Kraftstoffmassenfluss der Brennkraftmaschine 2 bestimmt. Dies geschieht im vorliegenden Fall in Abhängigkeit eines Grenz-Emissionsvektors, des zuvor bestimmten Ziel-Kraftstoffmassenflusses und des zuvor ermittelten Ist-Zustandsvektors der Brennkraftmaschine 2 mittels eines Datenmodells. Als Datenmodell wird vorliegend ein künstliches neuronales Netz verwendet, das als Neuronen einer Eingabeschicht den Grenz-Emissionsvektor, den Ziel-Kraftstoffmassenfluss und den Ist-Zustandsvektor der Brennkraftmaschine 2 aufweist. Die Ausgangsschicht des künstlichen neuronalen Netzes umfasst den Grenz-Kraftstoffmassenfluss und den Ist-Emissionsvektor als Neuronen. Die Ausgangsschicht des künstlichen neuronalen Netzes umfasst zusätzlich bzw. optional einen Vorhersage-Emissionsvektor als weiteres Neuron.

In einem nachfolgenden Verfahrensschritt V50 wird durch die Steuereinheit 13 der Soll-Kraftstoffmassenfluss bestimmt. Der Soll-Kraftstoffmassenfluss wird dabei dem kleineren Wert von Ziel-Kraftstoffmassenfluss und Grenz-Kraftstoffmassenfluss gleichgesetzt.

In einem weiteren Verfahrensschritt V60 wird der Soll-Kraftstoffmassenfluss an der Brennkraftmaschine 2 zum Zeitpunkt T+1 eingestellt. Hierzu kommuniziert die Steuereinheit 13 den Soll-Kraftstoffmassenfluss an die Motorsteuereinheit 14. Die Motorsteuereinheit 14 steuert den von einer Kraftstoffinjektionsanordnung bereitgestellten Kraftstoffmassenfluss entsprechend des Soll-Kraftstoffmassenflusses.

Es versteht sich, dass die Bestimmung des Ziel-Kraftstoffmassenflusses, des Grenz-Kraftstoffmassenflusses und des Soll-Kraftstoffmassenflusses für die Brennkraftmaschine 2 alternativ in der Motorsteuereinheit 14 erfolgen kann und diese Werte von der Motorsteuereinheit 14 an die Steuereinheit 13 kommuniziert werden können.

In einem weiteren optionalen Verfahrensschritt V70 kann nach dem Verfahrensschritt V50 und insbesondere parallel zu dem Verfahrensschritt V60 von Steuereinheit 13 eine Soll-Entladung des elektrischen Energiespeichers 6 bestimmt werden. Dies erfolgt vorliegend in Abhängigkeit der Differenz von Ziel-Kraftstoffmassenfluss und Soll-Kraftstoffmassenfluss. Alternativ oder in Kombination kann die Soll-Entladung des elektrischen Energiespeichers 6 auch in Abhängigkeit des Ladezustandes des elektrischen Energiespeichers 6 bestimmt werden.

Nachfolgend wird in einem ebenfalls optionalen Verfahrensschritt V80 durch die Steuereinheit 13 die Soll-Entladung des elektrischen Energiespeichers 6 zum Antreiben der Abtriebsanordnung 8 des Hybrid-Antriebsstrangs 1 zum Zeitpunkt T+1 eingestellt.

### Bezugszeichenliste

- 1: Hybrid-Antriebsstrang
- 2: Brennkraftmaschine
- 3: Motorwelle
- 4: Generator
- 5: elektrischer Zwischenkreis
- 6: elektrischer Energiespeicher
- 7, 7`: Abtriebseinheit
- 8: Abtriebsanordnung
- 9, 9`: Abtriebswelle
- 10: Generatorsteuereinheit
- 11, 11': Abtriebssteuereinheit
- 12: Energiespeichersteuereinheit
- 13: Steuereinheit
- 14: Motorsteuereinheit
- 15: äußere Spannungsquelle
- 16: Schalter

## Patentansprüche

1. Verfahren zum Betrieb eines Hybrid-Antriebsstrangs, umfassend die Schritte:
(V10) Ermitteln eines Ist-Zustandsvektors einer Brennkraftmaschine (2) des Hybrid-Antriebsstrangs (1), wobei der Ist-Zustandsvektor der Brennkraftmaschine (2) den Zustand der Brennkraftmaschine (2) zu einem Zeitpunkt (T) anhand von einer oder mehreren Vektorkoordinaten beschreibt;
(V20) Ermitteln einer Ziel-Leistung der Brennkraftmaschine (2);
(V30) Bestimmen eines Ziel-Kraftstoffmassenflusses für die Brennkraftmaschine (2) in Abhängigkeit der Ziel-Leistung der Brennkraftmaschine (2);
(V40) Bestimmen eines Grenz-Kraftstoffmassenflusses der Brennkraftmaschine (2) in Abhängigkeit eines Emissionsgrenzwertes, des Ziel-Kraftstoffmassenflusses und des Ist-Zustandsvektors der Brennkraftmaschine (2);
(V50) Bestimmen eines Soll-Kraftstoffmassenflusses durch Minimalwertbildung in Abhängigkeit von Ziel-Kraftstoffmassenfluss und Grenz-Kraftstoffmassenfluss; und
(V60) Einstellen des Soll-Kraftstoffmassenfluss an der Brennkraftmaschine (2).

2. Verfahren nach Anspruch 1,
**dadurch gekennzeichnet, dass** der Ist-Zustandsvektor der Brennkraftmaschine (2) mindestens einen Ist-Wert von Drehzahl, Druck im Verteilerrohr des Einspritzsystems, Kraftstoffmassenfluss, Zeitpunkt der Kraftstoff-Injektion im Arbeitsspiel, Anteil des zurückgeführten Abgases zur Frischluftmasse und Luftmassenstrom umfasst.

3. Verfahren nach einem der Ansprüche 1 oder 2,
**dadurch gekennzeichnet, dass** das Ermitteln der Ziel-Leistung der Brennkraftmaschine (2) in Abhängigkeit von einer Leistungsanforderung einer Abtriebsanordnung (8) des Hybrid-Antriebsstrangs (1) und einer gewünschten Ladeleistung eines elektrischen Energiespeichers (6) des Hybrid-Antriebsstrangs (1) erfolgt.

4. Verfahren nach Anspruch 3,
**dadurch gekennzeichnet, dass** die Leistungsanforderung der Abtriebsanordnung (8) in Abhängigkeit des Leistungsbedarfs mehrerer Abtriebseinheiten (7, 7') der Abtriebsanordnung (8) ermittelt wird.

5. Verfahren nach einem der Ansprüche 3 oder 4,
**dadurch gekennzeichnet, dass** die gewünschte Ladeleistung des Energiespeichers (6) in Abhängigkeit des Ladezustandes des Energiespeichers (6) ermittelt wird.

6. Verfahren nach einem der Ansprüche 1 bis 5,
**dadurch gekennzeichnet, dass** das Bestimmen des Grenz-Kraftstoffmassenflusses der Brennkraftmaschine (2) zusätzlich in Abhängigkeit eines Vorhersage-Emissionswertes erfolgt.

7. Verfahren nach Anspruch 6,
**dadurch gekennzeichnet, dass** das Bestimmen des Grenz-Kraftstoffmassenflusses der Brennkraftmaschine (2) mittels eines Datenmodells erfolgt, wobei ein Eingabe-Kraftstoffmassenfluss des Datenmodells solange iterativ herabgesetzt wird, bis der Vorhersage-Emissionswert des Datenmodells kleiner oder gleich zu dem Emissionsgrenzwert ist.

8. Verfahren nach Anspruch 7,
**dadurch gekennzeichnet, dass** initial der Eingabe-Kraftstoffmassenfluss des Datenmodells mit dem zuvor bestimmten Ziel-Kraftstoffmassenfluss gleichgesetzt wird.

9. Verfahren nach einem der Ansprüche 1 bis 8,
**dadurch gekennzeichnet, dass** das Bestimmen des Grenz-Kraftstoffmassenflusses der Brennkraftmaschine (2) mittels eines künstlichen neuronalen Netzes erfolgt.

10. Verfahren nach Anspruch 9,
**dadurch gekennzeichnet, dass** das künstliche neuronale Netz als Neuronen einer Eingabeschicht zumindest den Ist-Zustandsvektor der Brennkraftmaschine (2), den Ziel-Kraftstoffmassenfluss und den Emissionsgrenzwert aufweist.

11. Verfahren nach einem der Ansprüche 9 oder 10,
**dadurch gekennzeichnet, dass** das künstliche neuronale Netz als Neuronen einer Ausgangsschicht den Grenz-Kraftstoffmassenfluss und/oder einen Ist-Emissionsvektor aufweist.

12. Verfahren nach einem der Ansprüche 1 bis 11,
**gekennzeichnet durch**,
(V70) Bestimmen einer Soll-Entladung des elektrischen Energiespeichers (6) in Abhängigkeit der Differenz von Ziel-Kraftstoffmassenfluss und Soll-Kraftstoffmassenfluss und
(V80) Einstellen der Soll-Entladung des elektrischen Energiespeichers (6) zum Antreiben einer Abtriebsanordnung (8) des Hybrid-Antriebsstrangs (1).

## Claims

1. Method for operating a hybrid drive train, comprising the steps:
(V10) determining a current state vector of an internal combustion engine (2) of the hybrid drive train (1), wherein the current state vector of the internal combustion engine (2) describes the state of the internal combustion engine (2) at a time (T) by using one or more vector coordinates;
(V20) determining a target output of the internal combustion engine (2);
(V30) determining a target fuel mass flow for the internal combustion engine (2) as a function of the target output of the internal combustion engine (2);
(V40) determining a limiting fuel mass flow of the internal combustion engine (2) as a function of an emission limiting value, of the target fuel mass flow and of the current state vector of the internal combustion engine (2);
(V50) determining a desired fuel mass flow by forming a minimum value as a function of the target fuel mass flow and the limiting fuel mass flow; and
(V60) adjusting the desired fuel mass flow on the internal combustion engine (2).

2. Method according to Claim 1,
**characterized in that** the current state vector of the internal combustion engine (2) comprises at least one current value of the rotational speed, the pressure in the manifold of the injection system, the fuel mass flow, the time of the fuel injection in the working cycle, the proportion of the exhaust gas fed back to the fresh air mass and the air mass flow.

3. Method according to either of Claims 1 and 2,
**characterized in that** the target output of the internal combustion engine (2) is determined as a function of the power required by an output drive arrangement (8) of the hybrid drive train (1) and a desired charge output of an electrical energy store (6) of the hybrid drive train (1).

4. Method according to Claim 3,
**characterized in that** the power required by the output drive arrangement (8) is determined as a function of the power demand of a plurality of output drive units (7, 7') of the output drive arrangement (8).

5. Method according to either of Claims 3 and 4,
**characterized in that** the desired charge output of the energy store (6) is determined as a function of the state of charge of the energy store (6).

6. Method according to one of Claims 1 to 5,
**characterized in that** the limiting fuel mass flow of the internal combustion engine (2) is additionally determined as a function of a predicted emission value.

7. Method according to Claim 6,
**characterized in that** the limiting fuel mass flow of the internal combustion engine (2) is determined by means of a data model, wherein an input fuel mass flow of the data model is reduced iteratively until the predicted emission value of the data model is less than or equal to the emission limiting value.

8. Method according to Claim 7,
**characterized in that** the input fuel mass flow of the data model is initially set equal to the previously determined target fuel mass flow.

9. Method according to one of Claims 1 to 8,
**characterized in that** the limiting fuel mass flow of the internal combustion engine (2) is determined by means of an artificial neural network.

10. Method according to Claim 9,
**characterized in that** the artificial neural network has at least the current state vector of the internal combustion engine (2), the target fuel mass flow and the emission limiting value as neurons of an input layer.

11. Method according to either of Claims 9 and 10,
**characterized in that** the artificial neural network has the limiting fuel mass flow and/or a current emission vector as neurons of an output layer.

12. Method according to one of Claims 1 to 11,
**characterized by**
(V70) determining a desired discharge rate of the electrical energy store (6) as a function of the difference between the target fuel mass flow and the desired fuel mass flow, and
(V80) adjusting the desired discharge rate of the electrical energy store (6) for driving an output drive arrangement (8) of the hybrid drive train (1).

## Revendications

1. Procédé permettant de faire fonctionner une chaîne cinématique hybride, comprenant les étapes consistant à :
(V10) établir un vecteur d'état réel d'un moteur à combustion interne (2) de la chaîne cinématique hybride (1), dans lequel le vecteur d'état réel du moteur à combustion interne (2) décrit l'état du moteur à combustion interne (2) à un instant (T) à l'aide d'une ou de plusieurs coordonnées de vecteur ;
(V20) établir une puissance cible du moteur à combustion interne (2) ;
(V30) déterminer un débit massique de carburant cible pour le moteur à combustion interne (2) en fonction de la puissance cible du moteur à combustion interne (2) ;
(V40) déterminer un débit massique de carburant limite du moteur à combustion interne (2) en fonction d'une valeur limite d'émission, du débit massique de carburant cible et du vecteur d'état réel du moteur à combustion interne (2) ;
(V50) déterminer un débit massique de carburant théorique en calculant une valeur minimale en fonction du débit massique de carburant cible et du débit massique de carburant limite ; et
(V60) régler le débit massique de carburant théorique au niveau du moteur à combustion interne (2),

2. Procédé selon la revendication 1,
**caractérisé en ce que** le vecteur d'état réel du moteur à combustion interne (2) comprend au moins une valeur réelle de la vitesse de rotation, de la pression dans le tuyau de distribution du système d'injection, du débit massique de carburant, de l'instant de l'injection de carburant dans le cycle de fonctionnement, de la part des gaz d'échappement ramenés à la masse d'air frais et du débit massique d'air.

3. Procédé selon l'une quelconque des revendications 1 ou 2,
**caractérisé en ce que** l'établissement de la puissance cible du moteur à combustion interne (2) est effectué en fonction d'une demande de puissance d'un agencement de sortie (8) de la chaîne cinématique hybride (1) et d'une puissance de charge souhaitée d'un accumulateur d'énergie électrique (6) de la chaîne cinématique hybride (1).

4. Procédé selon la revendication 3,
**caractérisé en ce que** la demande de puissance de l'agencement de sortie (8) est établie en fonction de la demande de puissance de plusieurs unités de sortie (7, 7') de l'agencement de sortie (8).

5. Procédé selon l'une quelconque des revendications 3 ou 4,
**caractérisé en ce que** la puissance de charge souhaitée de l'accumulateur d'énergie (6) est établie en fonction de l'état de charge de l'accumulateur d'énergie (6).

6. Procédé selon l'une quelconque des revendications 1 à 5,
**caractérisé en ce que** la détermination du débit massique de carburant limite du moteur à combustion interne (2) est effectuée en plus en fonction d'une valeur d'émission prédictive.

7. Procédé selon la revendication 6,
**caractérisé en ce que** la détermination du débit massique de carburant limite du moteur à combustion interne (2) est effectuée au moyen d'un modèle de données, dans lequel un débit massique de carburant d'entrée du modèle de données est diminué par itération jusqu'à ce que la valeur d'émission prédictive du modèle de données soit inférieure ou égale à la valeur limite d'émission.

8. Procédé selon la revendication 7,
**caractérisé en ce qu'**initialement, le débit massique de carburant d'entrée du modèle de données est assimilé au débit massique de carburant cible déterminé précédemment.

9. Procédé selon l'une quelconque des revendications 1 à 8,
**caractérisé en ce que** la détermination du débit massique de carburant limite du moteur à combustion interne (2) est effectuée au moyen d'un réseau neuronal artificiel.

10. Procédé selon la revendication 9,
**caractérisé en ce que** le réseau neuronal artificiel présente en tant que neurones d'une couche d'entrée au moins le vecteur d'état réel du moteur à combustion interne (2), le débit massique de carburant cible et la valeur limite d'émission.

11. Procédé selon l'une quelconque des revendications 9 ou 10,
**caractérisé en ce que** le réseau neuronal artificiel présente en tant que neurones d'une couche de sortie le débit massique de carburant limite et/ou un vecteur d'émission réel.

12. Procédé selon l'une quelconque des revendications 1 à 11,
**caractérisé par** les étapes consistant à
(V70) déterminer une décharge théorique de l'accumulateur d'énergie électrique (6) en fonction de la différence entre le débit massique de carburant cible et le débit massique de carburant théorique, et
(V80) régler la décharge théorique de l'accumulateur d'énergie électrique (6) pour entraîner un agencement de sortie (8) de la chaîne cinématique hybride (1).
